# EUROPÄISCHE PATENTANMELDUNG

(11) **EP 1 002 935 A1**
(43) Veröffentlichungstag der Anmeldung: **24.05.2000**
(21) Anmeldenummer: 98811152.2
(22) Anmeldetag: 20.11.1998
(51) Int. Cl.: F01D 5/02, B23K 20/12, B23K 35/00

(54) **TiAl-Rotor einer Strömungsmaschine und Herstellungsverfahren**

(71) Anmelder: Asea Brown Boveri AG, 5401 Baden (CH)
(72) Erfinder: Nazmy, Mohamed, Dr., 5442 Fislisbach (CH)
(74) Vertreter: Kaiser, Helmut

(57) **Zusammenfassung**

Der Rotor ist Teil Strömungsmaschine, wie insbesondere eines Turboladers. Er weist ein hohen Temperaturen ausgesetztes Turbinenrad (5) auf mit einem Körper (5) aus einer Legierung auf der Basis eines Gamma-Titanaluminids sowie eine Lagerwelle mit einem Stahlkörper (2) und einem zylinderförmigen Zwischenstück (4). Das Turbinenrad (5) und der Stahlkörper (2) sind über das Zwischenstück (4) durch Reibschweissen starr miteinander verbunden. Eine hohe mechanische Festigkeit des Rotors (1) wird dadurch erreicht, dass das Zwischenstück (4) an seinem mit dem Turbinenrad (6) verbundenen Ende aus einer Nickel- oder Kobalt-Basislegierung besteht. Um unerwünschten Wärmefluss vom Turbinenrad (6) zu einem den Stahlkörper (2) der Lagerwelle führenden, temperaturempfindlichen Lager (9) zu reduzieren, ist das Zwischenstück (4) aus mindestens zwei starr miteinander verbundenen Zylinderabschnitten (40, 41) aufgebaut, von denen einer (40) aus der Nickel- oder Kobalt-Basislegierung und ein anderer (41) von einem Stahl gebildet ist mit einer gegenüber dem Werkstoff des Stahlkörpers (6) geringen Wärmeleitfähigkeit.

## Beschreibung

### TECHNISCHES GEBIET

Bei der Erfindung wird ausgegangen von einem Rotor für eine Strömungsmaschine, insbesondere einen Turbolader, nach den Oberbegriff von Patentanspruch 1.

### STAND DER TECHNIK

Ein Rotor der vorgenannten Art ist in EP 0 590 197 B beschrieben. Dieser Rotor weist ein hohen Temperaturen ausgesetztes Turbinenrad aus gamma-Titanaluminid auf sowie eine Lagerwelle mit einem Stahlkörper aus einem niedriglegierten Stahl, beispielsweise einem Vergütungsstahl mit einem Kohlenstoffanteil von ca. 0,4 Gewichtsprozent, einem Chromanteil von ca. 1 Gewichtsprozent sowie einem vergleichsweise geringen Molybdänanteil. Zwischen Turbinenrad und Stahlkörper ist ein Zwischenstück aus einer Nickelbasis-Legierung vorgesehen, welches mit dem Turbinenrad reibverschweisst ist. Das Zwischenstück weist vorteilhafterweise einen relativ niedrigen Anteil an Nickel auf, da so die Reibschweissverbindung des Gamma-Titanaluminidkörpers mit dem Zwischenstück bei vergleichsweise niedrigen Temperaturen hergestellt werden kann. Das Risiko von Rissbildungen wird so beim Reibschweissen in dem zur Versprödung neigenden Gamma-Titanaluminidkörper erheblich herabgesetzt und ein Rotor mit einer hohen mechanischen Festigkeit sowohl bei Raumtemperatur als auch bei Temperaturen bis 700°C erreicht.

### DARSTELLUNG DER ERFINDUNG

Der Erfindung, wie sie in den Patentansprüchen definiert ist, liegt die Aufgabe zugrunde, einen Rotor der eingangs genannten Art anzugeben, welcher sich nicht nur durch eine besonders grosse mechanische Festigkeit auszeichnet, sondern bei dem zugleich Wärmefluss vom Turbinenrad in die Lagerwelle gering gehalten wird.

Beim Rotor nach der Erfindung wird durch geeignete Ausbildung des Zwischenstücks sowohl bei Raumtemperatur als auch bei Temperaturen bis 700°C eine besonders hohe mechanische Festigkeit erreicht. Dies ist vor allem der vorteilhaften Ausbildung des Zwischenstücks zu verdanken, welches bei der Herstellung des Rotors durch Reibschweissen in besonders fester Weise mit dem Stahlkörper der Lagerwelle und mit dem Turbinenrad verbunden werden kann. Durch den Einbau wärmeflusshemmender Bestandteile kann zugleich am Turbinenrad auftretende Wärme nur zu einem sehr geringen Teil vom Turbinenrad über die Lagerwelle abfliessen. Das temperaturempfindliche Lager der mit dem Turbinenrad verbundenen Welle bleibt so vor unzulässiger Temperaturbelastung verschont.

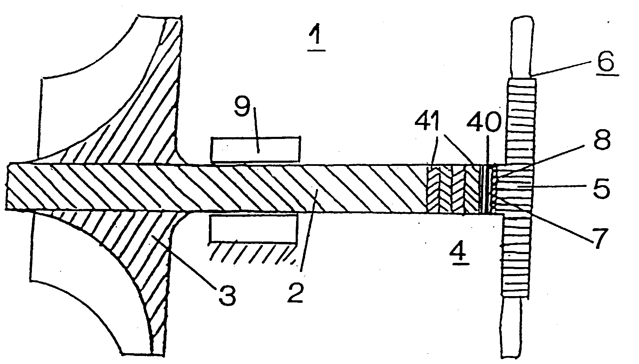

### KURZE BESCHREIBUNG DER ZEICHNUNG

Nachfolgend wird die Erfindung anhand einer Zeichnung näher erläutert. Hierbei zeigt die einzige Figur eine Aufsicht auf einen axial geführten Schnitt durch einen erfindungsgemässen Rotor eines Turboladers.

### WEG ZUR AUSFÜHRUNG DER ERFINDUNG

In der Figur bezeichnet 1 einen Rotor eines Turboladers mit einem als Welle des Turboladers dienenden zylinderförmigen Stahlkörper 2, dessen eines Ende ein beispielsweise aus einer Aluminiumlegierung bestehendes Verdichterrad 3 trägt, und dessen anderes Ende über ein Zwischenstück 4 mit einem Gamma-Titanaluminidkörper 5 starr verbunden ist. Der Gamma-Titanaluminidkörper 5 ist zumindest ein Teil eines dem Abgas einer Verbrennungsmaschine ausgesetzten Turbinenrades 6 des Turboladers.Das Bezugszeichen 7 bezeichnet eine Diffusionsschicht, welche die starre Verbindung zwischen dem Zwischenstück 4 und dem Gamma-Titanaluminidkörper 5 bewirkt.

Der Stahlkörper 2 weist eine Länge von beispielsweise 200 mm und einen Durchmesser von beispielsweise 45 mm auf. Er besteht aus einem niedriglegierten Stahl, beispielsweise einem Vergütungsstahl mit einem Kohlenstoffanteil von ca. 0,4 Gewichtsprozent, einem Chromanteil von ca. 1 Gewichtsprozent sowie einem vergleichsweise geringen Molybdänanteil. Ein solcher Stahl ist etwa ein Stahl des Typs St 575. Die Wärmeleitfähigkeit des Stahlkörpers 2 beträgt bei Raumtemperatur ca. 44 W/m·K und bei einer Betriebstemperatur von ca. 400°C ca. 37 W/m·K.

Das Zwischenstück 4 ist aus zwei Zylinderabschnitten 40, 41 aufgebaut. Der an den Stahlkörper 2 anschliessende Zylinderabschnitt 41 enthält vier Scheiben aus einem Stahl mit einer gegenüber dem Stahl des Stahlkörpers 2 geringen Wärmeleitfähigkeit. Der Zylinderabschnitt 40 enthält eine Scheibe aus einer Nickel- oder aus einer Kobalt-Basislegierung. Die Durchmesser der Zylinderabschnitte 40 und 41 sind an den Durchmesser des Stahlkörpers 2 angepasst. In axialer Richtung weisen die Zylinderabschnitte 40 bzw. 41 Längen von typischerweise 10 bis 20 mm bzw. 10 bis 30 mm auf. Ist der Werkstoff des Zylinderabschnitts 40 als Nickel-Basislegierung ausgeführt, so weist diese Legierung vorzugsweise einen Nickelanteil kleiner 65 Gewichtsprozent auf. Eine solche Legierung kann sowohl mit dem Zylinderabschnitt 41 als auch mit dem Gamma-Titanaluminidkörper 5 durch Reibschweissen verbunden werden, ohne dass bei hohen mechanischen und thermischen Belastungen während des Betriebes des Turboladers ein Aufbrechen der Schweissstellen oder ein Versprödungsbruch des Rotors 1, insbesondere im Bereich des gegenüber Stahl und der Nickel-Basislegierung vergleichsweise spröden Gamma-Titanaluminidkörpers 5, zu befürchten ist. Besonders vorteilhafte Legierungen, wie beispielsweise die unter der Bezeichnung INCONEL 718 von der Firma INCO vertriebene Nickel-Basislegierung, sind dem einleitend genannten Stand der Technik nach EP 0 590 197 B zu entnehmen.

Der Gamma-Titanaluminidkörper 5 weist einen an das Zwischenstück 4 angepassten zylindrischen Ansatz 8 von beispielsweise ebenfalls 45 mm Durchmesser auf und ist von einer intermetallischen Verbindung auf der Basis eines dotierten Gamma-Titanaluminids gebildet. Bevorzugte Legierungen sind dem zuvor genannten Stand der Technik zu entnehmen.

Der Zylinderabschnitt 41 kann anstelle aus vier auch aus nur einer oder auch mehr als vier Scheiben bestehen. Die Scheiben des Zylinderabschnitts 41 und der Zylinderabschnitt 40 sind durch Schweissen, insbesondere Reibschweissen, starr miteinander verbunden. Die Wärmeleitfähigkeit des so gebildeten Zwischenstücks 4 ist relativ gering und wird umso stärker herabgesetzt, je mehr Stahlscheiben verwendet werden. Als Material für die Scheiben des Zylinderstücks 41 wird mit Vorteil ein hochlegierter Stahl verwendet, beispielsweise ein solcher mit einer thermischen Leitfähigkeit bei Raumtemperatur kleiner 20 W/m·K. Solche Stähle sind typischerweise Stähle mit Legierungsanteilen grösser 10 Gewichtsprozent, wie beispielsweise Stähle mit einem Chrom- und Nickelanteil zwischen ca. 20 und 40 Gew%. Bevorzugte Beispiele stellen folgende Stähle dar:

### X6CrNiTi18-10 mit der Zusammensetzung in Gewichtsprozent

- C: bis 0,08
- Si: bis 1,0
- Mn: bis 2,0
- Cr: 17 - 19
- Ni: 9 - 12
- Ti: bis 0,7

Rest Eisen und nicht zu vermeidende Verunreinigungen
und mit einer thermischen Leitfähigkeit bei Raumtemperatur von ca. 16 W/m·K und bei 400 °C von ca. 20 W/m·K.

### X8CrNiMoVNb16-13 mit der Zusammensetzung in Gewichtsprozent

- C: bis 0,1
- Si: bis 0,6
- Mn: bis 1,5
- Cr: 15,5 ― 17,5
- Ni: 12,5 ― 14,5
- Mo: 1,1 bis 1,5
- V: 0,6 bis 0,9
- Nb+Ta: bis 1,2
- N: 0,06 bis 0,14

Rest Eisen und nicht zu vermeidende Verunreinigungen
und mit einer thermischen Leitfähigkeit bei Raumtemperatur von ca. 13 W/m·K und bei 400 °C von ca. 21 W/m·K.

### X 12 CrNi 25 21 mit der Zusammensetzung in Gewichtsprozent

- C: bis 0,15
- Si: bis 0,75
- Mn: bis 2,0
- C: 24 - 26
- Ni: 19 - 22

Rest Eisen und nicht zu vermeidende Verunreinigungen
und mit einer thermischen Leitfähigkeit bei Raumtemperatur von ca. 13 W/m·K und bei 400 °C von ca. 16 W/m·K.

### X 6 CrNiMoTi17-12-2 mit der Zusammensetzung in Gewichtsprozent

- C: bis 0,08
- Si: bis 1,0
- Mn: bis 2,0
- C: 16 - 19
- Ni: 10 ― 14
- Mo: 2,0 bis 2,5
- Ti: bis 0,7

Rest Eisen und nicht zu vermeidende Verunreinigungen
und mit einer thermischen Leitfähigkeit bei Raumtemperatur von ca. 15 W/m·K und bei 400 °C von ca. 20 W/m·K.

Der Rotor 1 wurde aus den einzelnen Komponenten wie folgt hergestellt: Zunächst wurde an den Stahlkörper 2 das Zwischenstück 4 angeschweisst. Hierbei wurde in einem routinemässig ausgeführten Reibschweissvorgang zunächst eine der Scheiben das Zylinderabschnitts 41 auf dem zum Turbinenrad 6 weisenden Ende des Stahlkörpers 2 angebracht und wurden darauf der Reihe nach in entsprechender Weise die verbleibenden drei Scheiben des Zylinderabschnitts 41 und der scheibenförmige Zylinderabschnitt 40 befestigt. Sodann wurden der Gamma-Titanaluminidkörper 5 mit dem aus dem Zwischenstück 4 und dem Stahlkörper 2 gebildeten Körper durch Reibschweissen verbunden wie dies im vorgenannten Stand der Technik beschrieben ist. Hierbei bildete sich die Diffusionsschicht 7. Die Schweissverbindungen zwischen dem Stahlkörper 2 und der zugeordneten Scheibe des Zylinderabschnitts 41 bzw. den beiden Zylinderabschnitten 40 und 41 zeichneten sich bei Raumtemperatur und bei Temperaturen von mehr als 500°C durch eine besonders hohe Festigkeit aus, da die zugeordneten Werkstoffe, zum einen der niedrig- und der hochlegierte Stahl und zum anderen der hochlegierte Stahl und die Nickel- oder Kobalt-Basislegierung, ganz hervorragend miteinander verschweisst werden konnten.

Der reibgeschweisste Rotor 1 wurde nach der Fertigstellung mit einer Geschwindigkeit von ca. 150°C pro Stunde auf ca. 600°C aufgeheizt, einige Stunden auf dieser Temperatur gehalten und anschliessend mit einer Geschwindigkeit von ca. 50°C pro Stunde abgekühlt. Hierdurch wurden beim Reibschweissen möglicherweise entstandene und zu Versprödung führende Spannungszustände entfernt.

Anhand von Zugversuchen ermittelte Festigkeitswerte eines derartig ausgebildeten und derartig hergestellten Rotors lagen bei Raumtemperatur überwiegend bei ca. 500 MPa, wobei die Zerstörung entweder an der Diffusionsschicht 7 oder am Gamma-Titanaluminidkörper 5 eintrat. Diese hohen Festigkeitswerte reichen für den Einsatz des Rotors in einer temperaturbelasteten Strömungsmaschine, wie insbesondere einer Gasturbine oder einem Turbolader, vollkommen aus. Am Lager 9 des mit dem Rotor 1 nach der Erfindung ausgerüsteten Turboladers trat eine Temperaturbelastung auf, welche gegenüber der Temperaturbelastung bei einem vergleichbar ausgebildeten Turbolader mit einem Rotor nach dem Stand der Technik unter vergleichbaren Betriebsbedingungen erheblich herabgesetzt ist.

### BEZEICHNUNGSLISTE

- 1: Rotor
- 2: Stahlkörper
- 3: Verdichterrad
- 4: Zwischenstück
- 5: Gamma-Titanaluminidkörper
- 6: Turbinenrad
- 7: Diffusionsschicht
- 8: Ansatz
- 9: Lager
- 40, 41: Zylinderabschnitte

## Patentansprüche

1. Rotor für eine Strömungsmaschine, insbesondere für einen Turbolader, mit einem hohen Temperaturen ausgesetzten Turbinenrad (5) aus einer Legierung auf der Basis eines Gamma-Titanaluminids, einer Lagerwelle mit einem Stahlkörper (2) und einem zylinderförmigen Zwischenstück (4), über welches das Turbinenrad (5) und der Stahlkörper (2) starr miteinander verbunden sind, wobei die Verbindung zwischen dem Turbinenrad (5) und dem Zwischenstück (4) durch Reibschweissen hergestellt ist, und wobei das Zwischenstück (4) an seinem mit dem Turbinenrad (6) verbundenen Ende aus einer Nickel- oder Kobalt-Basislegierung besteht, dadurch gekennzeichnet, dass das Zwischenstück (4) aus mindestens zwei starr miteinander verbundenen Zylinderabschnitten (40, 41) aufgebaut ist, von denen ein erster (40) aus der Nickel- oder Kobalt-Basislegierung und der zweite (41) von einem Stahl gebildet ist mit einer gegenüber dem Stahl des Stahlkörpers (2) geringen Wärmeleitfähigkeit.

2. Rotor nach Anspruch 1, dadurch gekennzeichnet, dass der Stahl des zweiten Zylinderabschnitts (41) hoch- und der Stahl des Stahlkörpers (2) niedriglegiert ist.

3. Rotor nach Anspruch 2, dadurch gekennzeichnet, dass bei Raumtemperatur die thermische Leitfähigkeit des Stahls des zweiten Zylinderabschnitts (41) kleiner 20 W/m·K und des Stahls des Stahlkörpers (2) grösser 30 W/m·K.

4. Rotor nach einem der Ansprüche 1 bis 3, dadurch gekennzeichnet, dass der zweite Zylinderabschnitt (41) mindestens zwei miteinander verbundene Scheiben aufweist.
